# EUROPÄISCHE PATENTANMELDUNG

(11) **EP 0 797 083 A1**
(43) Veröffentlichungstag der Anmeldung: **24.09.1997**
(21) Anmeldenummer: 96105821.1
(22) Anmeldetag: 13.04.1996
(51) Int. Cl.: G01K 17/08

(54) **Wärme-/Kältezähler**

(30) Priorität: 19.03.1996 CH 719/96
(71) Anmelder: Landis & Gyr Technology Innovation AG, 6301 Zug (CH)
(72) Erfinder: Dobeneck, Wolfgang, 99996 Urbach (DE); Leipold, Jörg, 99974 Mühlhausen (DE)

(57) **Zusammenfassung**

Ein Wärme-/Kältezähler weist einen ersten und einen zweiten Temperaturfühler (1; 2) auf, die über ein erstes bzw. zweites Anschlusskabel (3; 4) mit einem elektronischen Messwerk (14) verbunden sind. Das erste Anschlusskabel (3) weist vier Adern (6-9) auf, das zweite Anschlusskabel (4) weist wenigstens zwei Adern (10; 11) auf. Der erste Temperaturfühler (1) ist über zwei Adern (6; 7) des ersten Anschlusskabels (3) mit dem Messwerk (14) verbunden. Der zweite Temperaturfühler (2) ist über die beiden anderen Adern (8; 9) des ersten Anschlusskabels (3) und über zwei Adern (10; 11) des zweiten Anschlusskabels (4) mit dem Messwerk (14) verbunden. Der zweite Temperaturfühler (2) kann direkt im Gehäuse des Wärme-/Kältezählers eingebaut sein. Die Messung des Widerstandes der Temperaturfühler (1; 2) erfolgt in der 2-Leiter Messtechnik.

Auf diese Weise wird erreicht, dass die durch die beiden Temperaturfühler (1; 2) fliessenden Ströme (I₂; I₃) nahezu gleiche Wege zurücklegen und der gleichen Umgebungstemperatur ausgesetzt sind, so dass die durch Schwankungen der Umgebungstemperatur bedingten Messfehler beider Temperaturfühler (1; 2) gleich gross sind und sich bei der Differenzbildung aufheben.

## Beschreibung

Die Erfindung betrifft einen Wärme-/Kältezähler der im Oberbegriff des Anspruchs 1 genannten Art.

Solche Wärme-/Kältezähler eignen sich beispielsweise zur Wärme- bzw. Kälteverbrauchserfassung und -verrechnung.

Der Verbrauch an Wärme bzw. Kälte in einem Heiz- bzw. Kühlkreislauf wird bestimmt, indem die Durchflussmenge und die Temperaturen im Vorlauf und im Rücklauf eines Wärmeverbrauchers bzw. Kältebezügers erfasst werden. Da zur Bestimmung des Wärmeverbrauch/Kältebezugs die Temperaturdifferenz zwischen der Temperatur im Vorlauf und der Temperatur im Rücklauf massgeblich ist, müssen die Messfehler der beiden Temperaturmessungen möglichst identisch sein. Wärmezähler sind in der Regel mit Pt 100, Pt 500 oder Pt 1000 Widerstandstemperaturfühlern bestückt, deren Widerstand in Funktion der Temperatur wohlbekannt ist. Zur Messung des Widerstandes kommen sowohl die bekannten 2-Leiter oder 4-Leiter Messtechniken zur Anwendung. Der 2. Ausgabe des Wärmezähler-Handbuches der Firma Techem, das im VWEW-Verlag (Frankfurt am Main) herausgegeben wurde, ist im Kapitel 2.5.3.2 zu entnehmen, dass bei Verwendung der 2-Leiter Messtechnik die Kabel zum Vorlauf- und zum Rücklauftemperaturfühler gleich lang sein müssen sowie den gleichen Leiterquerschnitt und gleiches Kabelmaterial aufweisen müssen. Bei Verwendung der 4-Leiter Messtechnik entfallen diese Vorschriften, jedoch wird der messtechnische Aufwand grösser und die Gefahr einer falschen Verdrahtung nimmt zu.

Der Erfindung liegt die Aufgabe zugrunde, die Genauigkeit der Temperaturmessung solcher Wärme/-Kältezähler weiter zu verbessern.

Die genannte Aufgabe wird erfindungsgemäss gelöst durch die Merkmale des Anspruchs 1. Vorteilhafte Ausgestaltungen der Erfindung finden sich in den abhängigen Ansprüchen.

Gemäss der Erfindung werden für beide Anschlusskabel oder wenigstens für das längere Anschlusskabel Kabel mit vier Adern verwendet. Die Kabel und die Temperaturfühler werden so verdrahtet, dass die Messströme beider Temperaturfühler durch beide Anschlusskabel bzw. wenigstens durch das längere Anschlusskabel fliessen. Damit sind beide Messströme den gleichen Umweltbedingungen ausgesetzt und der nicht durch den Temperaturfühler bedingte Spannungsabfall ist in beiden Stromkreisen gleich gross, selbst dann, wenn die beiden Anschlusskabel verschiedenen Temperaturen ausgesetzt sind.

Nachfolgend werden Ausführungsbeispiele der Erfindung anhand der Zeichnung näher erläutert. Es zeigen:
- Fig. 1: ein erstes elektrisches Schema zur Verdrahtung der Temperaturfühler eines Wärme-/Kältezählers,
- Fig. 2: den Wärme-/Kältezähler mit einem eingebauten Temperaturfühler, und
- Fig. 3: ein weiteres elektrisches Schema des Wärme-/Kältezählers.

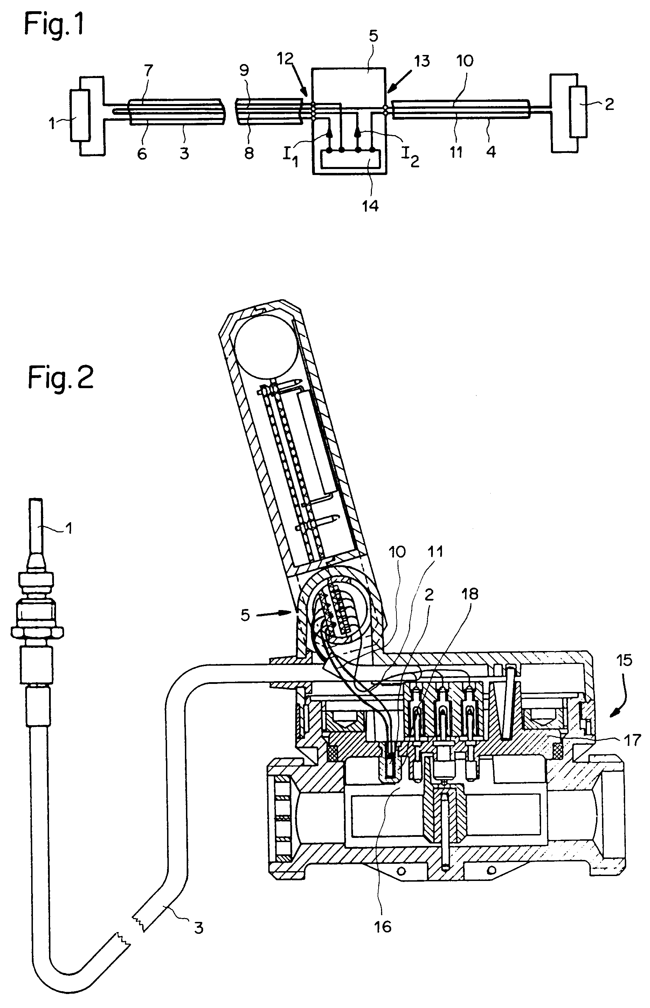

Die Fig. 1 zeigt das elektrische Schema eines Wärme-/Kältezählers mit einem ersten und einem zweiten Temperaturfühler 1 bzw. 2, die über ein erstes bzw. zweites Anschlusskabel 3 bzw. 4 mit einer elektronischen Messschaltung 5 verbunden sind. Die Temperaturfühler 1 und 2 weisen eine Metallhülle auf, in die ein temperaturempfindliches Messelement eingesetzt ist. Der erste Temperaturfühler 1 dient der Messung der Vorlauftemperatur, der zweite Temperaturfühler 2 dient der Messung der Rücklauftemperatur. Das erste Anschlusskabel 3 weist vier Adern 6 bis 9 auf, das zweite Anschlusskabel 4 weist zwei Adern 10 und 11 auf, die an Klemmen 12 bzw. 13 der elektronischen Messschaltung 5 anschliessbar sind. Der erste Temperaturfühler 1 ist über die beiden Adern 6 und 7 des ersten Anschlusskabels 3 mit dem Messwerk 14 der Messschaltung 5 verbunden. Die beiden anderen Adern 8 und 9 des ersten Anschlusskabels 3 sind im Bereich des ersten Temperaturfühlers 1 elektrisch kurzgeschlossen und gegen die Umgebung isoliert. Der zweite Temperaturfühler 2 ist nun über die Adern 8 und 9 des ersten Anschlusskabels 3 und über die beiden Adern 10 und 11 des zweiten Anschlusskabels 4 mit dem Messwerk 14 der Messschaltung 5 verbunden. Vom Messwerk 14 fliesst nun ein Messstrom I₁ durch die Ader 6 des Anschlusskabels 3, durch den Temperaturfühler 1 und durch die Ader 7 des Anschlusskabels 3 zum Messwerk 14 zurück. Ein weiterer Messstrom I₂ fliesst vom Messwerk 14 durch die Adern 8 und 9 des Anschlusskabels 3, durch die Ader 10 des Anschlusskabels 4, durch den Temperaturfühler 2 und durch die Ader 11 des Anschlusskabels 4 zum Messwerk 14 zurück. Die in diesen Stromkreisen verursachten Spannungsabfälle werden im Messwerk 14 gemessen. Die Messung des elektrischen Widerstandes der Temperaturfühler 1 und 2 erfolgt also in der 2-Leiter Messtechnik.

Diese Art der Verkabelung der Temperaturfühler 1 und 2 eignet sich besonders dann, wenn der Temperaturfühler 2, wie in der Fig. 2 dargestellt, direkt im Gehäuse 15 des Wärme-/Kältezählers eingebaut ist, so dass er in die hydraulische Messkammer 16 hineinragt. Anstelle des zweiten Anschlusskabels 4 mit den beiden Adern 10 und 11 sind für die beiden Adern 10 und 11 getrennte Kabel verwendet. Im ersten Anschlusskabel 3 sind beide Ströme I₁ und I₂ der gleichen Umgebungstemperatur ausgesetzt. Die Temperatur in den Adern 10 und 11 entspricht in etwa der Temperatur im Gehäuse 15 und auch etwa der Temperatur des Messwerks 14. Zudem ist die Länge der Adern 10 und 11 sehr kurz bemessen, so dass der Spannungsabfall über den Adern 10 und 11 sehr gering ist und wenn, dann nur einen unbedeutenden Messfehler verursacht.

Bei einem Flügelradzähler ist die hydraulische Messkammer 16 bevorzugt auf an sich bekannte Weise mit einer Abdeckplatte 17 aus Kunststoffgegen aussen abgedichtet, wobei ein Fühlertopf 18 zur Aufnahme des Temperaturfühlers 2 direkt in die Abdeckplatte eingespritzt ist. Der zweite Temperaturfühler 2 ist nun gebildet durch den Fühlertopf 18 und das darin eingesetzte temperaturempfindliche Messelement.

Die Messfehler beider Temperaturfühler 1 und 2 sind somit selbst bei wechselnder Umgebungstemperatur annähernd gleich gross. Eine aufdas erste Anschlusskabel 3 einwirkende Temperaturänderung wird für beide Temperaturfühlerstromkreise gleich wirksam und hat keinen Einfluss auf die Differenz der von den beiden Temperaturfühlern 1 und 2 gemessenen Temperaturen. Die bezogene Energie kann deshalb mit verbesserter Genauigkeit bestimmt werden.

Auch die Lötstellen in beiden Temperaturfühlerstromkreisen sind möglichst gleichartig.

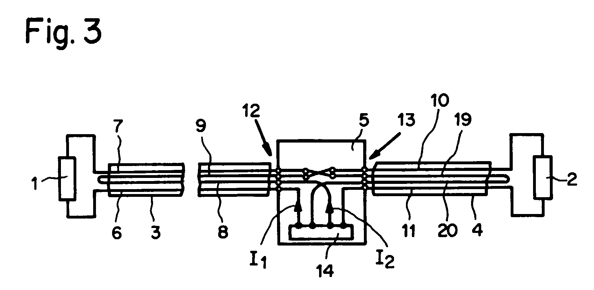

Die Fig. 3 zeigt das elektrische Schema einer Weiterentwicklung der Erfindung, bei der auch das zweite Anschlusskabel 4 mit vier Adern 10, 11, 19 und 20 ausgebildet ist. Die beiden Adern 19 und 20 sind im Bereich des zweiten Temperaturfühlers 2 kurzgeschlossen. Der erste Temperaturfühler 1 ist nun über die Adern 6 und 7 des ersten Anschlusskabels 3 und die in Reihe geschalteten Adern 19 und 20 des zweiten Anschlusskabels 4 mit dem Messwerk 14 verbunden. Der zweite Temperaturfühler 2 ist wie im ersten Beispiel über die Adern 8 und 9 des ersten Anschlusskabels 3 und über die in Reihe geschalteten Adern 10 und 11 des zweiten Anschlusskabels 4 mit dem Messwerk 14 verbunden. Bei dieser Ausführung legen die Ströme I₁ und I₂ gleiche Wege zurück und sind gleichen Umgebungstemperaturen ausgesetzt. Die Temperaturdifferenz ist somit noch genauer messbar, und zwar unabhängig davon, ob der zweite Temperaturfühler 2 im Gehäuse eingebaut ist oder nicht.

Die Adern 6 bis 11 bzw. einschliesslich der Adern 19 und 20 der Anschlusskabel 3 und 4 sind an die Klemmen 12 bzw. 13 anschliessbar. Die restliche Verdrahtung erfolgt in der Messschaltung 5. Die Anschlusskabel 3 und 4 können bei Bedarf zusätzlich mit einer Abschirmung versehen sein, um elektrische Störeinflüsse möglichst auszuschliessen.

Für die temperaturempfindlichen Messelemente der Temperaturfühler 1 und 2 eignen sich insbesondere die bekannten Platin oder Nickel Fühler, deren Innenwiderstand in erster Näherung proportional zur Temperatur ist. Der Wärme-/Kältezähler kann die Durchflussmenge auf mechanische Weise, beispielsweise mittels eines Flügelrades, oder aufandere Weise, beispielsweise mittels Ultraschall, erfassen.

## Patentansprüche

1. Wärme-/Kältezähler mit einem ersten und einem zweiten Temperaturfühler (1; 2), die über ein erstes bzw. zweites Anschlusskabel (3; 4) mit einem Messwerk (14) verbunden sind und deren Widerstand in der 2-Leiter Messtechnik gemessen wird, **dadurch gekennzeichnet, dass** das erste Anschlusskabel (3) vier Adern (6-9) aufweist, dass das zweite Anschlusskabel (4) wenigstens zwei Adern (10; 11) aufweist, dass der erste Temperaturfühler (1) über zwei Adern (6; 7) des ersten Anschlusskabels (3) mit dem Messwerk (14) verbunden ist, und dass der zweite Temperaturfühler (2) über die beiden anderen Adern (8; 9) des ersten Anschlusskabels (3) und über zwei Adern (10; 11) des zweiten Anschlusskabels (4) mit dem Messwerk (14) verbunden ist.

2. Wärme-/Kältezähler nach Anspruch 1, **dadurch gekennzeichnet, dass** das zweite Anschlusskabel (4) auch vier Adern (10; 11; 19; 20) aufweist, und dass der erste Temperaturfühler (1) über zwei Adern (6; 7) des ersten Anschlusskabels (3) und zwei Adern (19; 20) des zweiten Anschlusskabels (4) mit dem Messwerk (14) verbunden ist.

3. Wärme-/Kältezähler nach Anspruch 1 oder 2, **dadurch gekennzeichnet, dass** der zweite Temperaturfühler (2) direkt im Gehäuse (15) des Wärme-/Kältezählers eingebaut ist.

4. Wärme-/Kältezähler nach Anspruch 3, **dadurch gekennzeichnet, dass** das Gehäuse (15) eine Abdeckplatte (17) aus Kunststoff aufweist, in die ein Fühlertopf (18) direkt eingespritzt ist, und dass in den Fühlertopf (18) ein temperaturempfindliches Messelement eingesetzt ist, wobei der Fühlertopf (18) und das temperaturempfindliche Messelement den zweiten Temperaturfühler (2) bilden.

5. Wärme-/Kältezähler nach Anspruch 3 oder 4, **dadurch gekennzeichnet, dass** die Adern (10; 11; 19; 20) nicht zusammen im zweiten Anschlusskabel (4) sondern in getrennten Kabeln geführt sind.
